# EUROPÄISCHE PATENTSCHRIFT

(11) **EP 1 450 062 B1**
(45) Veröffentlichungstag und Bekanntmachung des Hinweises auf die Patenterteilung: **03.01.2007**
(21) Anmeldenummer: 04003608.9
(22) Anmeldetag: 18.02.2004
(51) Int. Cl.: F16D 48/06

(54) **Verfahren und Vorrichtung zur Steuerung einer Kupplung**
Method and device for controlling a clutch
Procédure et dispositif pour commander un embrayage

(30) Priorität: 20.02.2003 DE 10307036
(43) Veröffentlichungstag der Anmeldung: 25.08.2004
(73) Patentinhaber: LuK Lamellen und Kupplungsbau Beteiligungs KG, 77815 Bühl (DE)
(72) Erfinder: Jung, Mario, 76547 Sinzheim (DE)

(56) Entgegenhaltungen:
- FR-A- 2 751 388
- FR-A- 2 813 360
- FR-A- 2 823 545
- US-A- 4 629 045

## Beschreibung

Die Erfindung betrifft ein Verfahren und eine Vorrichtung zur Steuerung eines Antriebsstrangs mit einer automatisierten Kupplung 2, insbesondere zum Abgleich einer Wegmessung in der Bewegungsübertragung von einem Aktor 11 zu einer Kupplung, insbesondere einer im Antriebsstrang eines Kraftfahrzeugs zwischen einem Antriebsmotor 1 und einem automatisierten Schaltgetriebe 3 enthaltenen Kupplung.

Die Automatisierung einer Kupplung mittels eines Aktors, beispielsweise eines Elektromotors, setzt eine genaue Kenntnis der jeweiligen Betriebsstellung der Kupplung voraus. Dazu erfolgt eine Wegmessung in der Bewegungsübertragung von einem Aktor zu der Kupplung. Diese Wegmessung ist naturgemäß mit Toleranzen behaftet, die beispielsweise während des Betriebs der Kupplung auftreten, oder mit unmittelbaren Fehlern behaftet, wie sie beispielsweise bei der Impulszählung von Inkremeritalsensoren vorkommen, was zu Ungenauigkeiten in der absoluten Positionsbestimmung führt. Deshalb ist es zweckmäßig, regelmäßig oder bei Eintritt bestimmter Bedingungen, wenigstens eine vorbestimmte Betriebsstellung der Kupplung zu erfassen und diese Stellung als Bezugswert für die Wegmessung zu werten, d. h. das Wegsignal in der vorbestimmten Betriebsstellung beispielsweise auf Null oder einen anderen Bezugswert abzugleichen.

Dabei sind die Betriebserfordemisse des Antriebsstrangs zu berücksichtigen.

Wird der Abgleich im Betriebszustand mit geschlossenem Antriebsstrang durchgeführt, d. h. während des Abgleichszeitraums besteht die betriebliche Anforderung, dass von dem Antriebsmotor ein Moment auf die Räder 6 des Kraftfahrzeugs übertragen werden muss, beispielsweise bei einem Abgleich während einer Autobahnfahrt im 5. Gang, muss der eingelegte Gang erhalten werden und der Abgleich kann nur bei geschlossener Kupplung vorgenommen werden.

Wird dagegen der Abgleich im Betriebszustand mit geöffnetem Antriebsstrang durchgeführt, d. h. während des Abgleichszeitraums besteht die betriebliche Anforderung, dass kein Moment von dem Antriebsmotor auf die Räder des Kraftfahrzeugs übertragen werden darf, beispielsweise bei einem Abgleich während des Stehens des Kraftfahrzeugs an einer Ampel mit laufendem Motor, gibt es zwei Möglichkeiten den Abgleich durchzuführen. Der Abgleich kann erfolgen bei
- eingelegtem Gang und vollständig geöffneter Kupplung oder
- ausgelegtem Gang, d. h. in der neutralen Gangstellung des Schaltgetriebes, entweder bei geschlossener oder geöffneter Kupplung.

Aus der DE 44 33 825 C2 und DE 199 53 292 A1 ist ein Kupplungsaktor mit Inkrementalwegmessung bekannt, bei dem als Referenzposition und damit für einen möglichen Zählfehlerausgleich feste Anschläge an beiden Enden des Stellbereiches des Kupplungsaktors dienen.

Charakteristisch für das bekannte und nach DE 44 33 825 C2 weiterentwickelte Verfahren DE 199 53 292 A1 ist, dass der Zählfehlerausgleich der Wegmessung bei eingelegtem Gang, d. h. dann, wenn sich das Schaltgetriebe im Eingriff befindet, durchgeführt wird. Dies bedingt, dass in Abhängigkeit der Betriebserfordernisse an den Antriebsstrang, zum einen, bei geschlossenem Antriebsstrang, d. h. dann, wenn während des Abgleichzeitraumes von dem Antriebsmotor ein Moment auf die Räder des Kraftfahrzeugs übertragen werden muss, der Nullabgleich der Wegmessung an einem Anschlag bei geschlossener Kupplung durchgeführt werden muss und zum anderen, bei geöffnetem Antriebsstrang, d. h. wenn kein Moment von dem Antriebsmotor auf das Schaltgetriebe während des Abgleichzeitraumes übertragen werden darf, der Abgleich der Wegmessung an einem zweiten Anschlag bei geöffneter Kupplung durchgeführt werden muss, demgemäss mindestens zwei feste mechanische Anschläge zur Ermittlung der Referenzposition des Aktors bei geschlossener bzw. geöffneter Kupplung erforderlich sind.

In der FR-A-2 813 360 wird ein System offenbart, welches zum Aktualisieren einer in einer elektronischen Steuereinrichtung abgelegten Bezugsposition eines Stellgliedes einer Kupplungseinrichtung einer im Antriebsstrang eines Fahrzeugs enthaltenen Kupplung, eine von der Steuereinrichtung gesteuerte Betätigungseinrichtung zum Betätigen des Stellgliedes, eine inkrementell arbeitende Wegmesseinrichtung zur Erfassung des von dem Stellglied zurückgelegten Weges, eine Einrichtung zum Erfassen des Erreichens einer Bezugsposition des Stellgliedes und Speichern des zugehörigen Ausgangssignals der inkrementellen Wegmesseinrichtung als Bezugsposition und Sensoren zum Erfassen von Zustandsparametern des Antriebsstrangs enthält, wobei die Steuereinrichtung auf eine Aktualisierungsanforderung für eine Bezugsposition hin eine Aktualisierung abhängig von den Zustandsparametern des Antriebsstrangs gesteuert.

Der Erfindung liegt die Aufgabe zugrunde, ein Verfahren und eine Vorrichtung der eingangs beschriebenen Art derart weiterzuentwickeln, dass auf einfache Weise ein sicherer Nullabgleich möglich ist.

Der das Verfahren betreffende Teil wird erfindungsgemäß dadurch erreicht, dass im Betriebszustand, sowohl bei geschlossenem Antriebsstrang, als auch bei geöffnetem Antriebsstrang, an der gleichen vorbestimmten Stellung des Betätigungsglieds der Kupplung, beispielsweise an einem festen mechanischen Anschlag im Stellbereich des Betätigungsglieds der Kupplung, der Abgleich der Wegmessung durchgeführt wird.

Das erfindungsgemäße Verfahren erfordert somit keine zweite vorbestimmte Stellung, mithin keinen zweiten Anschlag für das Betätigungsglied zum Abgleich der Wegmessung. Die für den Abgleich erforderliche Ermittlung einer Referenzposition des Aktors kann in vorteilhafter Weise, sowohl bei geschlossenem als auch bei geöffnetem Antriebsstrang, an nur einer vorbestimmten Stellung erfolgen.

Im Betriebszustand mit geöffnetem Antriebsstrang erfolgt der Abgleich aus der neutralen Gangstellung des Schaltgetriebes heraus, wobei die vorbestimmte Stellung durch mindestens einen Anschlag definiert ist. Dies hat den Vorteil, dass der Abgleich sowohl an einem Anschlag bei geschlossener Kupplung als auch an einem Anschlag bei geöffneter Kupplung erfolgen kann.

In einer besonders vorteilhaften Ausgestaltung des erfindungsgemäßen Verfahrens erfolgt der Abgleich der Wegmessung bei geöffnetem Antriebsstrang aus der neutralen Gangstellung des Schaltgetriebes heraus und die vorbestimmte Stellung ist durch einen Anschlag bei geschlossener Kupplung definiert. Dies hat den Vorteil, dass für den Abgleich der Wegmessung im Betriebszustand sowohl bei geschlossenem als auch geöffnetem Antriebsstrang nur ein Anschlag erforderlich ist. Dadurch kann ein zweiter Anschlag zum Abgleich der Wegmessung des Aktors vermieden werden.

Denkbar ist es auch, durch Anfahren eines Anschlags bei geöffneter Kupplung in der neutralen Gangstellung des Schaltgetriebes den Abgleich der Wegmessung durchzuführen, beispielsweise dann, wenn bei geschlossener Kupplung kein fester mechanischer Anschlag zur Verfügung steht.
In vorteilhafter Ausgestaltung des Verfahrens wird die Wegmessung mit einem Inkrementalsensor durchgeführt, dessen Ausgangssignale gezählt und einer mit einer Speichereinrichtung versehenen Steuereinrichtung 7 zugeführt werden und zur Steuerung des Betriebs des Aktors 11 dienen, wobei einer vorbestimmten Stellung des Betätigungsglieds ein in der Speichereinrichtung gespeicherter Bezugswert entspricht, welches Verfahren folgende Schritte enthält:
- Betätigen des Aktors bis das Betätigungsglied eine durch vorbestimmte Änderungen von Betriebsparametem des Aktors 11 in der Steuereinrichtung 7 erkannte vorbestimmte Stellung erreicht
- Auslesen des der vorbestimmten Stellung entsprechenden Zählstandes
- Abspeichem dieses Zählstandes als neuen Bezugswert.

In einer erfinderischen Weiterentwicklung des Verfahrens ist vorgesehen, dass im Betriebszustand mit geschlossenem Antriebsstrang zum Öffnen desselben folgende Schritte durchgeführt werden:
- Aufbringen einer in Richtung einer Auslegebewegung auf die Schaltelemente des eingelegten Gangs wirkenden Schaltkraft und
- ein langsames Öffnen der Kupplung soweit bis das durch die Kupplung auf das Schaltgetriebe übertragene Moment verringert wird, derart, dass die Schaltverzahnung der Schaltelemente des eingelegten Ganges außer Eingriff gelangt.

Bei unbekannter Betriebsstellung der Kupplung beispielsweise bei Betriebsbeginn oder wenn aufgrund einer Störung in der Steuereinrichtung die gespeicherten Daten über die Betriebsstellung der Kupplung verloren gegangen sind kann die Kupplung nicht positionsgesteuert geöffnet werden. Um den eingelegten Gang auslegen zu können, darf das von der Kupplung im Antriebsstrang übertragene Moment nicht zu groß sein. Erfindungsgemäß werden die Schaltelemente des eingelegten Gangs in Richtung der neutralen Gangstellung des Schaltgetriebes mit Hilfe der Getriebeaktorik vorgespannt und die Kupplung langsam geöffnet. Sobald das von der Kupplung übertragene Moment im Antriebsstrang klein genug ist und das Kräftegleichgewicht aus den zwischen den eingreifenden Zahnrädem wirkenden Reibungskräften und der diesen entgegenwirkenden Schaltkraft aus der vorgespannten Getriebeaktorik erreicht ist, springt der eingelegte Gang in die neutrale Gangstellung des Schaltgetriebes heraus und der Antriebsstrang ist geöffnet.

Nach einer weiteren vorteilhaften Ausgestaltung des erfindungsgemäßen Verfahrens wird die Kupplungsposition, bei der die Schaltverzahnung der Schaltelemente des eingelegten Gangs außer Eingriff gelangt näherungsweise als Bezugspunkt für die Wegmessung des Betätigungsglieds der Kupplung zu Grunde gelegt. Auf diese Weise kann ein erster grober Abgleichspunkt für die aktuelle Kupplungsposition ermittelt werden, ohne dass ein Anschlag angefahren werden muss.

In weiter vorteilhafter Weise kann mit der näherungsweise bekannten Position des Aktors 11insbesondere für den exakten Abgleich der Wegmessung die vorbestimmte Stellung des Betätigungsglieds, beispielsweise ein fester mechanischer Anschlag bei geschlossener Kupplung, schneller und exakter angefahren werden.

Die der Erfindung zu Grunde liegende Aufgabe wird femer gelöst durch ein Verfahren zur Steuerung eines Antriebsstrangs, insbesondere einer im Antriebsstrang eines Kraftfahrzeugs im Kraftweg zwischen einem Antriebsmotor 1 und einem mittels einer Getriebeaktorik 8 automatisierten Schaltgetriebe angeordneten automatisierte mittels eines Aktors 11 mit einem Betätigungsglied betreibbaren Kupplung 2, wobei das Erreichen mindestens einer vorbestimmten Position des Betätigungsglieds des Aktors 11 von einer Wegmessung erfasst und die so erfasste Position in einer Steuereinrichtung 7 hinterlegt und als ein Bezugspunkt für die Wegmessung bestimmt wird, wobei im Betriebszustand mit geschlossenem Antriebsstrang zum Öffnen desselben durchgeführt werden:
- Aufbringen einer in Richtung einer Auslegebewegung auf die Schaltelemente des eingelegten Gangs wirkenden Schaltkraft und
- ein langsames Öffnen der Kupplung soweit bis das durch die Kupplung auf das Schaltgetriebe übertragene Moment verringert wird, derart, dass die Haltekraft der Schaltverzahnung der Schaltelemente des eingelegten Ganges außer Eingriff gelangt und die neutrale Gangstellung des Schaltgetriebes eingelegt ist
- zu Grunde legen der Kupplungsposition, bei der die Schaltverzahnung der Schaltelemente des eingelegten Gangs außer Eingriff gelangt, als näherungsweisen Bezugspunkt für die Wegmessung des Betätigungsglieds der Kupplung.

In weiterer vorteilhafter Ausgestaltung des erfindungsgemäßen Verfahrens wird der Betriebszustand, bei dem die Schaltverzahnung der Schaltelemente der Getriebewelle außer Eingriff gelangt, durch einen im Antriebsstrang enthaltenen Sensor erfasst.

Zweckmäßigerweise ist der Sensor ein in der Getriebesensorik des automatisierten Schaltgetriebes bereits vorhandene Sensor, beispielsweise ein Inkrementalsensor der Getriebeaktorik 8. Auf diese Weise kann die Getriebesensorik zur näherungsweise Bestimmung der Betriebsstellung der Kupplung verwendet und ein zusätzlicher Sensor vermieden werden.

In weiter vorteilhafter Ausgestaltung des erfindungsgemäßen Verfahrens ist der Sensor als ein im Antriebsstrang enthaltener Drehmomentensensor ausgestaltet.

In erfinderischer Weiterbildung des Verfahrens kann der so erfasste Betriebszustand in einer mit einer Speichereinrichtung versehenen Steuereinrichtung 7 hinterlegt und in erster Näherung als Bezugspunkt für einen Abgleich der Wegmessung in der Betätigungsübertragung zwischen dem Aktor 11 und der Kupplung bestimmt werden.

Eine vorteilhafte Ausführungsform zur Durchführung des erfindungsgemäßen Verfahrens ist eine Vorrichtung bestehend aus einem Antriebsmotor 1, einem Schaltgetriebe 3, einer Kupplung 2 zwischen dem Antriebsmotor und dem Schaltgetriebe, einem Aktor 11 zur Bewegung eines Betätigungsgliedes zum Betätigen der Kupplung, einer Wegmesseinrichtung in der Betätigungsübertragung zwischen dem Aktor 11 und des Betätigungsgliedes zur Erfassung der Betriebsstellung der Kupplung, einem Mikroprozessor mit einer Speichereinrichtung enthaltendes Steuergerät 7 dem die Ausgangssignale der Wegmessung zur Umwandlung in Ortsinformation zugeführt werden, zur Steuerung des Aktors 11 und mindestens eine Anschlagsvorrichtung in der Betätigungsübertragung zwischen dem Aktor und dem Betätigungsglied, wobei das Erreichen des Anschlags durch Änderung von Betriebsparametem des Aktors 11 in der Steuereinrichtung 7 erfasst wird und die zugehörige Ortsinformation als Bezugswert in einer mit einer Speichereinrichtung versehenen Steuereinrichtung 7 gespeichert wird.

In einer weiteren vorteilhaften Ausführungsform der erfindungsgemäßen Vorrichtung ist ein Elektromotor als Aktor 11 und ein die Drehung der Welle des Elektromotors erfassender Inkrementalsensor als Wegmesseinrichtung enthalten.

Die Betätigungsübertragung zwischen Aktor und Kupplung enthält in zweckmäßiger Weise mindestens eine Anschlagvorrichtung zur Begrenzung des Stellbereichs des Betätigungsglieds, wobei die Anschlagvorrichtung ein ortsfestes Bauteil für eine Anlage eines in der Bewegungsübertragung zwischen Aktor und Betätigungsglied enthaltenen Bauteils gebildet wird, die eine Weiterbewegung des Aktors sperrt, und beispielsweise als fester mechanischer Anschlag ausgeführt sein kann.

Die Anschlagvorrichtung zur Begrenzung des Stellbereichs des Betätigungsglieds der Kupplung kann in vorteilhafter Weise in Richtung der geschlossenen oder der geöffneten Kupplung oder in beiden Richtungen des Stellbereichs angeordnet werden.

Nach einem weiteren erfinderischen Gedanken ist im Antriebsstrang eine Einrichtung zum Erkennen des Betriebszustandes enthalten, der Eintritt, wenn die Schaltverzahnung der Schaltelemente der Getriebewelle außer Eingriff gelangt.

Weiterhin enthält die besagte Einrichtung zweckmäßiger Weise einen Sensor.

Vorteilhafterweise ist der Sensor in einer Wegmesseinrichtung in der Bewegungsübertragung zwischen einem Getriebeaktor 8 und einem Betätigungsglied zum Betätigen der Schaltelemente der Getriebewelle angeordnet.

Des weiteren ist in vorteilhafter Ausgestaltung der erfindungsgemäßen Vorrichtung der Gertriebeaktor 8 ein Elektromotor und die Wegmesseinrichtung ein die Drehung einer Welle des Elektromotors erfassender Inkrementalsensor, dessen Ausgangssignale gezählt und einer mit einer Speichereinrichtung versehenen Steuereinrichtung 7 zugeführt werden, wobei als Erreichen des besagten Betriebszustands gewertet wird, wenn die Bewegungsgeschwindigkeit des Betätigungsglieds ausgehend von geschlossener Kupplung, einen Schwellenwert überschreitet.

Vorteilhaft kann nach einem weiteren erfindungsgemäßen Gedanken der Sensor als ein das über eine im Antriebsstrang enthaltene Welle übertragene Drehmoment erfassender Drehmomentensensor ausgebildet sein, wobei als Erreichen des besagten Betriebszustands gewertet wird, wenn das erfasste Drehmoment ausgehend von geschlossener Kupplung, einen Schwellenwert unterschreitet.

Die Erfindung wird im Folgenden anhand einer schematischen Zeichnung beispielsweise und mit weiteren Einzelheiten erläutert.

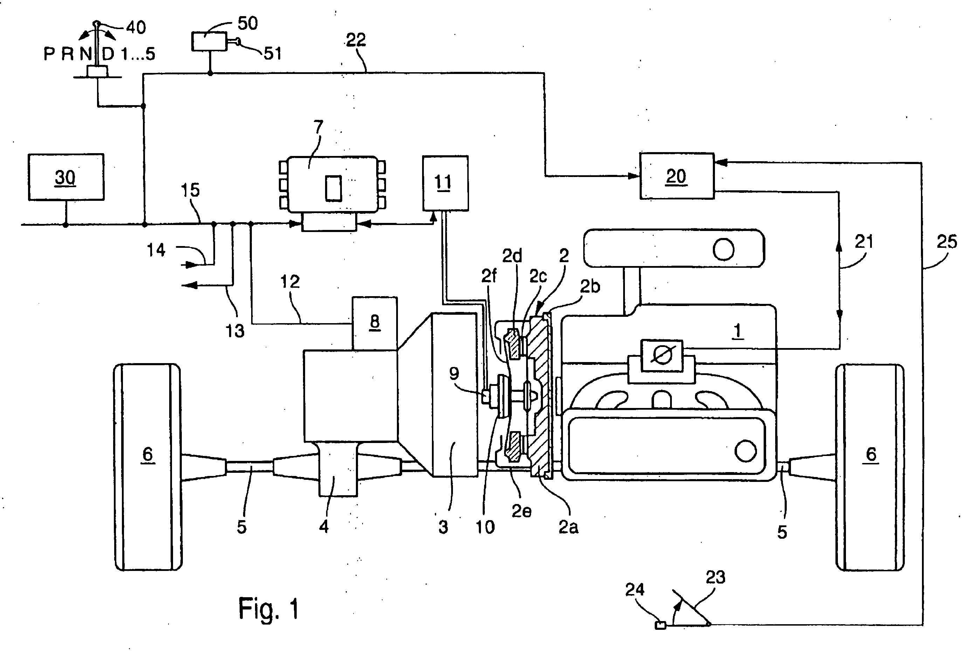

Die Figur 1 zeigt eine schematische Darstellung eines Kraftfahrzeuges mit einem Antriebsmotor 1, wie Verbrennungskraftmaschine, mit einem Drehmomentübertragungssystem 2 und einem Getriebe 3 im Antriebsstrang. Weiterhin ist ein Differential 4, sind Abtriebswellen 5 und von den Abtriebswellen angetriebene Räder 6 dargestellt. An den Rädem können nicht dargestellte Drehzahlsensoren angeordnet sein, welche die Drehzahlen der Räder detektieren. Die Drehzahlsensoren können auch zu anderen Elektronikeinheiten funktional zugehören, wie beispielsweise einem Antiblockiersystem (ABS). Aus zumindest einer Raddrehzahl kann mittels einer Steuereinheit 7 zumindest eine Fahrzeuggeschwindigkeit und/oder eine Getriebedrehzahl bestimmt werden.

Die Antriebseinheit 1, kann auch als Hybridantrieb mit beispielsweise einem Elektromotor, einem Schwungrad mit Freilauf und einer Verbrennungskraftmaschine ausgestaltet sein.

Das Drehmomentübertragungssystem 2 ist als Reibungskupplung ausgestaltet, wobei das Drehmomentübertragungssystem auch mit einer anderen Kupplung, beispielsweise mit einer Lamellenkupplung, ausgestaltet sein kann. Die Reibungskupplung kann auch als eine einen Verschleiß nachstellende selbsteinstellende Kupplung ausgebildet sein.

Die Vorrichtung zur automatisierten Betätigung eines Getriebes 3 umfasst eine Steuereinheit 7 und einen von der Steuereinheit 7 ansteuerbaren Aktor 8. Ebenso kann die Steuereinheit 7 einen Aktor 11 ansteuern, zur automatisierten Betätigung des Drehmomentübertragungssystems 2. In der Figur 1 ist eine Steuereinheit 7 und einen schematisch dargestellten Aktor 8 zu erkennen. Die Steuereinheit 7 kann als integrierte Steuereinheit ausgebildet sein, welche die Steuerung oder Regelung beispielsweise des Drehmomentübertragungssystems und des Getriebes durchführt. Weiterhin kann auch eine Motorelektronik in der Steuereinheit integriert sein. Ebenso kann die Ansteuerung des Drehmomentübertragungssystems und des Getriebes, respektive der Aktoren 8,11 zur Betätigung des Drehmomentübertragungssystems und des Getriebes von unterschiedlichen Steuereinheiten durchgeführt werden.

Ebenso ist es möglich, dass die Steuereinheiten von Drehmoment-übertragungssystem, Getriebe und/oder Motorsteuerung getrennt angeordnet sind und über Daten- und/oder Signalleitungen miteinander kommunizieren.

Weiterhin stehen die Steuereinheiten oder Elektronikeinheiten mit Sensoren in Signalverbindung, die der Steuereinheit oder den Steuereinheiten die Betriebsparameter des aktuellen Betriebspunktes übermitteln.

Ebenso ist es möglich, dass die Steuereinheit alle benötigten Informationen über Datenleitungen oder einen Datenbus erhält.

Die Steuereinheit 7 ist mit einer Computereinheit ausgestattet um die eingehenden Signale und Systemgrößen empfangen, verarbeiten, abspeichern, abrufen und weiterleiten zu können. Weiterhin generiert die Steuereinheit Steuergrößen und/oder Signale zur Ansteuerung von Aktoren zur Betätigung, sowie zur Weiterleitung an andere Elektronikeinheiten.

Das Drehmomentübertragungssystem 2 ist auf ein Schwungrad 2a montiert oder mit diesem verbunden. Das Schwungrad kann als einteiliges Schwungrad oder als geteiltes Schwungrad mit Primärmasse und Sekundärmasse ausgestaltet sein, wobei zwischen den Einzelschwungmassen, wie beispielsweise zwischen der Primärmasse und der Sekundärmasse, eine Torsionsschwingungs-dämpfungseinrichtung angeordnet ist. Weiterhin kann ein Anlasserzahnkranz 2b an dem Schwungrad angeordnet sein. Die Kupplung weist eine Kupplungsscheibe 2c mit Reibbelägen und eine Druckplatte 2d sowie ein Kupplungsdeckel 2e und eine Tellerfeder 2f auf. Die selbsteinstellende Kupplung weist zusätzlich noch Mittel auf, welche eine Verstellung und ein Verschleißnachstellung erlauben, wobei ein Sensor, wie Kraft- oder Wegsensor vorhanden ist, welcher eine Situation detektiert, in welcher eine Nachstellung aufgrund beispielsweise von Verschleiß notwendig ist und bei einer Detektion auch selbsttätig durchgeführt wird.

Das Drehmomentübertragungssystem wird mittels eines Ausrückers 9 beispielsweise mit einem Ausrücklager 10 betätigt. Die Steuereinheit 7 steuert den Aktor 11 an, welcher die Betätigung der Kupplung durchführt. Die Betätigung des Ausrückers kann elektromotorisch, elektrohydraulisch, wie beispielsweise druckmittelbetätigt, wie hydraulisch oder mittels eines anderen Betätigungsmechanismus erfolgen. Der Ausrücker 9 mit Ausrücklager 10 kann als Zentralausrücker ausgebildet sein, der koaxial zur Getriebeeingangswelle angeordnet ist und mittels Beaufschlagung beispielsweise der Tellerfederzungen der Kupplung die Kupplung ein- und ausgerückt. Der Ausrücker kann aber auch als mechanischer Ausrücker ausgestaltet sein, welcher ein Ausrücklager oder ein vergleichbares Element betätigt, beaufschlagt oder bedient.

Der Aktor 8 betätigt insbesondere mit seinem zumindest einen Ausgangs- oder Betätigungselement oder mit mehreren Ausgangs- oder Betätigungselementen das Getriebe 3 zum Schalten und/oder Wählen. Die Ansteuerung der Schalt und/oder Wählbetätigung hängt von der Bauart des Getriebes ab.

Es sind insbesondere Getriebe mit einer zentralen Schaltwelle zu betrachten, bei welchen ein Schalt- oder Wählvorgang durch eine axiale Betätigung oder eine Betätigung in Umfangsrichtung der zentralen Schaltwelle, respektive umgekehrt erfolgt. Ein Aktor betätigt beispielsweise mit einem Betätigungselement die axiale Betätigung der zentralen Schaltwelle und mit einem anderen Betätigungselement die Betätigung der Welle in Umfangsrichtung. Dabei kann die Schaltbewegung in Umfangsrichtung erfolgen und die Wählbetätigung in axialer Richtung oder umgekehrt.

Weiterhin sind Getriebe mit zwei Wellen zu betrachten, bei welchen jeweils eine Welle zum Schalten und einer Welle zum Wählen der Getriebeübersetzung vorhanden sind, wobei beide Wellen in Umfangsrichtung betätigt werden um einen Schaltvorgang oder einen Wählvorgang durchzuführen.

Ebenso sind Getriebe mit Schaltstangen zu betrachten, bei welchen die Schaltstangen in axialer Richtung betätigt werden um mit einem Schaltvorgang eine Getriebeübersetzung zu schalten, wobei ein Wählvorgang durch die Auswahl der betätigten Schaltstange erfolgt.

Die Wellen oder Schaltstangen stellen getriebeinterne Schaltelemente dar oder die Wellen betätigen solche innerhalb des Getriebes bei einer Betätigung. Der Aktor 8 betätigt direkt oder indirekt getriebeinteme Schaltelemente zum Einlegen, Herausnehmen oder Wechseln von Gangstufen oder Übersetzungsstufen, wie eine zentrale Schaltwelle, Wellen oder Schaltstangen oder andere Schaltelemente.

Die Steuereinheit 7 ist über die Signalverbindung 12 mit dem Aktor 8 verbunden, so dass Steuersignale und/oder Sensorsignale oder Betriebszustandssignale ausgetauscht, weitergeleitet oder abgefragt werden können. Weiterhin stehen die Signalverbindung 13 und 14 zur Verfügung, über welche die Steuereinheit mit weiteren Sensoren oder Elektronikeinheiten zumindest zeitweise in Signalverbindung stehen. Solche anderen Elektronikeinheiten können beispielsweise die Motorelektronik, eine Antiblockiersystemelektronik oder eine Antischlupfregelungselektronik sein. Weitere Sensoren können Sensoren sein, die allgemein den Betriebszustand des Fahrzeuges charakterisieren oder detektieren, wie zum Beispiel Drehzahlsensoren des Motors oder von Rädem, Drosselklappenstellungssensoren, Gaspedalstellungssensoren oder andere Sensoren. Die Signalverbindung 15 stellt eine Verbindung zu einem Datenbus her, wie beispielsweise CAN-Bus, über welchen Systemdaten des Fahrzeuges oder anderer Elektronikeinheiten zur Verfügung gestellt werden können, da die Elektronikeinheiten in der Regel durch Computereinheiten miteinander vernetzt sind.

Ein automatisiertes Getriebe kann derart geschaltet werden oder einen Gangwechsel erfahren, dass dies von dem Fahrer des Fahrzeuges initiiert wird, in dem er mittels beispielsweise eines Schalters, eines Tasters oder einer anderen Getriebewahleinrichtung 40 ein Signal zum herauf- oder herunterschalten gibt. Weiterhin könnte auch ein Signal zur Wahl des nächsten einzulegenden Gangs gegeben werden. Entsprechend kann auch mittels eines elektronischen Schalthebels ein Signal zur Verfügung gestellt werden, in welchen Gang das Getriebe schalten soll.

In einem anderen Getriebeprogramm kann eine automatisierte Betätigung des Getriebes gewählt werden, so dass die Wahl des aktuellen Gangs in Abhängigkeit von den Betriebsparametem durchgeführt wird und gegebenenfalls ein Schaltvorgang automatisiert eingeleitet wird. Ein automatisiertes Getriebe kann aber auch mittels beispielsweise Kennwerten, Kennlinien oder Kennfeldem und auf der Basis von Sensorsignalen bei gewissen vorbestimmten Punkten einen Gangwechsel selbständig durchführen, ohne dass der Fahrer einen Gangwechsel veranlassen muss.

Weiterhin kann beispielsweise eine Neutralposition N eingestellt werden, in welcher keine Antriebsverbindung zwischen Getriebeeingang und Getriebeausgang vorliegt. Weiterhin kann eine Parkstellung P gewählt werden, in welcher eine Parksperre realisiert wird. Diese Parkstellung kann auch automatisch gewählt werden, wenn beispielsweise der Zündschlüssel 51 aus dem Zündschloss abgezogen wird und der Betriebszustand des Fahrzeuges dies erlaubt. Beispielsweise sei ein Abziehen des Zündschlüssels bei hohen Geschwindigkeiten genannt, wobei in dieser Situation eine Parksperre nicht automatisiert eingelegt werden sollte.

Die Getriebewahleinheit 40 kann somit auf einen Bereich M, wie manuelle fahrerseitige Gangwahl, einen Bereich D, wie automatische Gangwahl zum Fahrbetrieb, einen Bereich P, wie Parksperre, und/oder einen Bereich N, wie Neutralstellung, eingestellt werden. Weiterhin kann über beispielsweise Schalter oder einen Hebel ein manuelles Schalten eingeleitet werden.

Das Fahrzeug ist vorzugsweise mit einem elektronischen Gaspedal 23 oder Lasthebel ausgestattet, wobei das Gaspedal 23 einen Sensor 24 ansteuert, mittels welchem die Motorelektronik 20 beispielsweise die Kraftstoffzufuhr, Zündzeitpunkt, Einspritzzeit oder die Drosselklappenstellung über die Signalleitung 21 des Motors 1 steuert oder regelt. Das elektronische Gaspedal 23 mit Sensor 24 ist über die Signalleitung 25 mit der Motorelektronik 20 signalverbunden. Die Motorelektronik 20 ist über die Signalleitung 22 mit der Steuereinheit 7 in Signalverbindung. Weiterhin kann auch eine Getriebesteuerelektronik 30 in Signalverbindung mit den Einheiten 7 und 20 stehen. Eine elektromotorische Drosselklappensteuerung ist hierfür zweckmäßig, wobei die Position der Drosselklappe mittels der Motorelektronik angesteuert wird. Bei solchen Systemen ist eine direkte mechanische Verbindung zum Gaspedal nicht mehr notwendig oder zweckmäßig.

Das Fahrzeug verfügt weiterhin über eine Motorstarteinrichtung 50, welche ausgehend von einem fahrerseitigen Motorstartversuch mittels beispielsweise einer Betätigung des Zündschlüssels 51 im Zündschloss eine Motorelektronik und einen Anlasser ansteuert zum Starten und/oder Anlassen des Motors.

## Patentansprüche

1. Verfahren zur Steuerung eines Antriebsstrangs, insbesondere einer im Antriebsstrang eines Kraftfahrzeugs im Kraftweg zwischen einem Antriebsmotor und einem mittels einer Getriebeaktorik automatisierten Schaltgetriebe (3) angeordneten automatisierte mittels eines Aktors (11) mit einem Betätigungsglied betätigbaren Kupplung (2), wobei das Erreichen mindestens einer vorbestimmten Position des Betätigungsglieds des Aktors (11) von einer Wegmessung erfasst und die so erfasste Position in einer Steuereinrichtung (7) hinterlegt und als ein Bezugspunkt für die Wegmessung bestimmt wird, wobei der Abgleich der Wegmessung sowohl in einem ersten Betriebszustand bei geschlossenem Antriebsstrang, mit einem während des Abgleichszeitraums von dem Antriebsmotor (1) auf mindestens ein Rad (6) des Kraftfahrzeugs übertragbaren Moment, als auch in einem zweiten Betriebszustand bei geöffnetem Antriebsstrang, an der gleichen vorbestimmten Position des Betätigungsglieds durchgeführt wird, **dadurch gekennzeichnet, dass** bei einem Vorliegen des ersten Betriebszustandes zum Öffnen des Antriebsstrangs folgende Schritte durchgeführt werden:
- Aufbringen einer in Richtung einer Auslegebewegung auf die Schaltelemente des eingelegten Gangs wirkenden Schaltkraft und
- ein langsames Öffnen der Kupplung soweit bis das durch die Kupplung auf das Schaltgetriebe übertragene Moment verringert wird, derart, dass die Schaltverzahnung der Schaltelemente des eingelegten Gangs außer Eingriff gelangt.

2. Verfahren nach Anspruch 1, **dadurch gekennzeichnet, dass** in dem zweiten Betriebszustand der Abgleich in der neutralen Gangstellung des Schaltgetriebes erfolgt und die vorbestimmte Position durch mindestens einen Anschlag bestimmt ist.

3. Verfahren nach Anspruch 2, **dadurch gekennzeichnet, dass** die vorbestimmte Position durch einen Anschlag bei geschlossener Kupplung bestimmt ist.

4. Verfahren nach einem der Ansprüche 1 bis 3, **dadurch gekennzeichnet, dass** die Kupplungsposition, bei dem die Schaltverzahnung der Schaltelemente der Getriebewelle außer Eingriff gelangt näherungsweise als Bezugspunkt für die Wegmessung des Betätigungsglieds der Kupplung zu Grunde gelegt wird.

5. Verfahren nach Anspruch 4, **dadurch gekennzeichnet, dass** der Betriebszustand, bei dem die Schaltverzahnung der Schaltelemente der Getriebewelle außer Eingriff gelangt, durch einen im Antriebsstrang enthaltenen Sensor erfasst wird.

6. Vorrichtung zum Durchführen des Verfahrens nach Anspruch 1 bis 5, enthaltend einen Antriebsmotor (1), ein Schaltgetriebe (3), eine Kupplung (2) zwischen dem Antriebsmotor und dem Schaltgetriebe, einen Aktor (11) zur Bewegung eines Betätigungsgliedes zum Betätigen der Kupplung, eine Wegmesseinrichtung zur Erfassung der Betriebsstellung der Kupplung in der Betätigungsübertragung zwischen dem Aktor mit einem Betätigungsglied und der Kupplung, einen Mikroprozessor mit einer Speichereinrichtung enthaltendes Steuergerät (7) dem die Ausgangssignale der Wegmessung zur Umwandlung in Ortsinformation zugeführt werden, zur Steuerung des Aktors (11) und mindestens einen Anschlag in der Betätigungsübertragung zwischen dem Aktor und dem Betätigungsglied, der eine Weiterbewegung des Aktors sperrt, wobei das Erreichen des Anschlags durch Änderung von Betriebsparametern des Aktors in der Steuereinrichtung (7) erfasst wird und die zugehörigen Ortsinformation als Bezugswert in der Speichereinrichtung gespeichert wird und wobei der Antriebsstrang eine Einrichtung zum Erkennen des Betriebszustandes enthält, der Eintritt, wenn die Schaltverzahnung der Schaltelemente der Getriebewelle außer Eingriff gelangt.

## Claims

1. A method for controlling a power train, in particular an automated clutch (2) operable by means of an actuator (11) with an operating element, situated in the power train of a motor vehicle in the power path between a drive engine and a gear shifting transmission (3) automated by means of a transmission actuating system, wherein the attainment of at least one predetermined position of the operating element of the actuator (11) is detected by a displacement measurement and the position thus detected is stored in a control device (7) and established as a reference point for the displacement measurement, the comparison of the displacement measurement being performed both in a first operating mode, where the power train is engaged, with a torque that is transmittable from the drive engine (1) to at least one wheel (6) of the motor vehicle during the comparison period, as well as in a second operating mode, where the power train is disengaged, at the same predetermined position of the operating element, **characterized in that** when the first operating mode is present the following steps are carried out to disengage the power train:
- application of a shifting force acting on the shifting elements of the engaged gear in the direction of a disengaging motion, and
- a slow disengaging of the clutch until the torque transmitted through the clutch to the gear shifting transmission is reduced, such that the shifting engagement of the shifting elements of the engaged gear is no longer meshed.

2. The method according to Claim 1, **characterized in that** in the second operating mode the comparison is made while the gear shifting transmission is in the neutral setting, and the predetermined position is established by at least one detent.

3. The method according to Claim 2, **characterized in that** the predetermined position is established by a detent with the clutch engaged.

4. The method according to one of Claims 1 through 3, **characterized in that** the clutch position in which the shifting engagement of the shifting elements of the transmission shaft is no longer meshed is taken as the approximate basis for the reference point for the displacement measurement of the operating element of the clutch.

5. The method according to Claim 4, **characterized in that** the operating mode in which the shifting engagement of the shifting elements of the transmission shaft is no longer meshed is detected by a sensor contained in the power train.

6. A device for carrying out the method according to Claims 1 through 5, containing a drive engine (1), a gear shifting transmission (3), a clutch (2) between the drive engine and the gear shifting transmission, an actuator (11) to move an operating element to operate the clutch, a displacement measuring device to detect the operating position of the clutch in the transmission of actuation between the actuator with an operating element and the clutch, a microprocessor with a controller (7) containing a memory device, to which the output signals of the displacement measurement are sent for conversion into location information for controlling the actuator (11), and at least one detent in the transmission of actuation between the actuator and the operating element which blocks the actuator from moving further, where the arrival at the detent is detected through changes in operating parameters of the actuator in the control device (7) and the corresponding information about the location is stored in the memory device as a reference value and where the power train contains a device for recognizing the operating state that arises when the shaft gearing of the shifting elements of the gear shaft ceases to be meshed.

## Revendications

1. Procédé de commande d'une transmission, notamment d'un embrayage (2) placé dans la transmission d'un véhicule automobile, dans le trajet de puissance entre un moteur d'entraînement et une boîte de vitesses automatisée (3) au moyen d'une technique d'actionneurs de transmission, pouvant être manoeuvrée au moyen d'un actionneur (11) avec un organe d'actionnement, l'atteinte d'au moins une position prédéfinie de l'organe d'actionnement de l'actionneur (11) étant détectée par une mesure de course et la position ainsi détectée étant sauvegardée dans un dispositif de commande (7) et déterminée comme point de référence pour la mesure de la course, l'ajustage de la mesure de course étant réalisé à la même position prédéfinie de l'organe d'actionnement aussi bien dans un premier état de service, avec transmission fermée avec un couple transmissible pendant la période d'ajustage du moteur d'entraînement (1) sur au moins une roue (6) du véhicule automobile, que dans un deuxième état de service, avec transmission ouverte, **caractérisé en ce qu'**en présence du premier état de service, les étapes suivantes sont réalisées pour ouvrir la transmission :
- application sur les éléments de commande d'une force de commutation agissant dans le sens d'un désenclenchement de la vitesse enclenchée et
- une ouverture lente de l'embrayage, jusqu'à ce que le couple transmis par l'embrayage sur la boîte de vitesse se réduise de façon telle, que la denture de couplage des éléments de commande de la vitesse engagée se désengage.

2. Procédé selon la revendication 1, **caractérisé en ce que** dans le deuxième état de service, l'ajustage est assuré dans la position du point mort de la boîte de vitesses et la position prédéfinie est déterminée par au moins une butée.

3. Procédé selon la revendication 2, **caractérisé en ce que** la position prédéfinie est déterminée par une butée, alors que l'embrayage est fermé.

4. Procédé selon l'une quelconque des revendications 1 à 3, **caractérisé en ce que** la position d'embrayage, dans laquelle la denture de couplage des éléments de commande de l'arbre de transmission se désengage est approximativement prise en tant que base de point de référence pour la mesure de course de l'organe d'actionnement de l'embrayage.

5. Procédé selon la revendication 4, **caractérisé en ce que** l'état de service dans lequel la denture de couplage des éléments de commande de l'arbre de transmission se désengage est détecté par un capteur compris dans la transmission.

6. Dispositif pour la réalisation du procédé selon la revendication 1 à 5, comprenant un moteur d'entraînement (1), une boîte de vitesses (3), un embrayage (2) entre le moteur d'entraînement et la boîte de vitesses, un actionneur (11) pour déplacer un organe d'actionnement pour manoeuvrer l'embrayage, un dispositif de mesure de course, pour détecter la position de service de l'embrayage dans la transmission de manoeuvre entre l'actionneur avec un organe d'actionnement et l'embrayage, un microprocesseur avec un dispositif de commande (7) comprenant une mémoire, auquel sont amenés les signaux de sortie de la mesure de course, pour transformation en information locale, pour la commande de l'actionneur (11) et au moins une butée dans la transmission de manoeuvre entre l'actionneur et l'organe d'actionnement, qui bloque un déplacement ultérieur de l'actionneur, l'atteinte de la butée étant détectée par modification de paramètres de service de l'actionneur dans le dispositif de commande (7) et l'information locale associée étant sauvegardée dans la mémoire en tant que valeur de référence et la transmission comprenant un dispositif de reconnaissance de l'état de service, qui intervient lorsque la denture de couplage des éléments de commande de l'arbre de transmission se désengage.
